(19) Europäisches Patentamt
European Patent Office
Office européen des brevets

(11) EP 3 296 764 A1

(12) EUROPEAN PATENT APPLICATION

(43) Date of publication:
21.03.2018 Bulletin 2018/12

(51) Int Cl.:
G01S 17/32 (2006.01)          G01S 7/499 (2006.01)
G01S 7/491 (2006.01)

(21) Application number: 17191189.4

(22) Date of filing: 14.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 19.09.2016 US 201615268733

(71) Applicant: Delphi Technologies, Inc.
Troy, MI 48007-5052 (US)

(72) Inventor: YUAN, Ping
SIMI VALLEY, CA 93063 (US)

(74) Representative: Robert, Vincent et al
Delphi France SAS
Bâtiment Le Raspail - Paris Nord 2
22, avenue des Nations
CS 65059 Villepinte
95972 Roissy CDG Cedex (FR)

(54) COHERENT LIDAR SYSTEM FOR AUTOMATED VEHICLES

(57)    A coherent lidar system (10) suitable for use on an automated vehicle (12) includes a laser-unit (16), a lens (28), a coupler (30), and a polarized-beam-splitter (34). The laser-unit (16) is used to provide a laser-beam (18) directed toward a target-area (20) and generate a local-oscillator (22). The local-oscillator (22) is characterized by a reference-polarization (24). The lens (28) is used to collect reflected-light (26) that is a reflection of the laser-beam (18) by a target (14) present in the tar-get-area (20). The coupler (30) is used to combine the reflected-light (26) collected by the lens (28) and the local-oscillator (22) to form a composite-beam (32). The polarized-beam-splitter (34) used to provide a first-beam (36) that corresponds to the composite-beam (32) polarized to a first-polarization (38), and a second-beam (40) that corresponds to the composite-beam (32) polarized to a second-polarization (42) different from the first-polarization (38).

FIG. 1

**Description**

**TECHNICAL FIELD OF INVENTION**

This disclosure generally relates to a coherent lidar system, and more particularly relates to a system that includes a polarized-beam-splitter used to provide a first-beam that corresponds to a composite-beam formed of a local-oscillator and reflected light polarized to a first-polarization, and a second-beam that corresponds to the composite-beam polarized to a second-polarization different from the first-polarization.

**BACKGROUND OF INVENTION**

It is known that by utilizing coherent optical detection, a frequency modulated continuous wave (FMCW) lidar can improve receiver sensitivity, reduce range dependence, and avoid the high peak power required of the output laser when compared to a lidar that operates based on laser pulses. The low laser power requirement and potential to cover a long range with semiconductor lasers makes coherent detection particularly attractive for vehicle applications. However, the coherent detection is based on the interference between the reflected-light reflected by a target and a polarized local-oscillator (LO) signal, and only the reflected-light components with the same polarization can provide the interference necessary for coherent detection. Unfortunately, coherent detection is sensitive to the polarization of the return beam, which is subject to many factors out of control of the lidar. Normally, in order to optimize the signal-to-noise ratio (SNR), the polarization of the return signal and the local-oscillator signal must be carefully aligned, which historically requires an electro-mechanical or electro-optical feedback loop or polarization controller to align the polarization of the return signal with the local-oscillator signal. Available examples of a polarization controller are typically too bulky and expensive for use on space and cost sensitive automotive applications.

**SUMMARY OF THE INVENTION**

The problem of the system sensitivity to the polarization state of the return optical signal is solved by combining the local-oscillator signal and the returned signal in a fiber coupler and then separating the combined signal using a polarization beam splitter. The orientation of the splitter is selected such that the two output beams from the splitter have the same power when there is local-oscillator signal input only. After photo detection and amplification, the current signal of the two channels will be combined as a sum of square for the further signal process. It is noted that after the combination, the signal power or amplitude will be independent from the polarization state of the optical return signal from target.

In accordance with one embodiment, a coherent lidar system suitable for use on an automated vehicle is provided. The system includes a laser-unit, a lens, a coupler, and a polarized-beam-splitter. The laser-unit is used to provide a laser-beam directed toward a target-area and generate a local-oscillator. The local-oscillator is characterized by a reference-polarization. The lens is used to collect reflected-light that is a reflection of the laser-beam by a target present in the target-area. The coupler is used to combine the reflected-light collected by the lens and the local-oscillator to form a composite-beam. The polarized-beam-splitter used to provide a first-beam that corresponds to the composite-beam polarized to a first-polarization, and a second-beam that corresponds to the composite-beam polarized to a second-polarization different from the first-polarization.

The first-polarization and the second-polarization may be selected so a first-power of the local-oscillator present in the first-beam is substantially equal to a second-power of the local-oscillator present in the second-beam.

The reference-polarization of the local-oscillator may be characterized as linear-polarization to a reference-angel, the first-polarization may be characterized as linear-polarization to a first-angle measured relative to the reference-angle, and the second-polarization may be characterized as linear-polarization to a second-angle measured relative to the reference-angle. The second-angle may be perpendicular to the first-angle. The first-angle may be minus forty-five degrees relative to the reference-angle, and the second-angle may be plus forty-five degrees relative to the reference-angle. The reference-polarization of the local-oscillator may be characterized as linear-polarization to a reference-angel, the first-polarization may be characterized as clockwise-polarization, and the second-polarization may be characterized as counter-clockwise-polarization. The laser-unit may be configured to frequency-modulate the laser-beam and the local-oscillator.

The system may include a first-detector used to provide a first-signal indicative of the first-beam, and a second-detector used to provide a second-signal indicative of the second-beam. The system may include a processor configured to combine the first-signal and the second-signal using a sum-of-squares process to provide a ranging-signal indicate of a distance to the target.

Further features and advantages will appear more clearly on a reading of the following detailed description of the preferred embodiment, which is given by way of non-limiting example only and with reference to the accompanying drawings.

**BRIEF DESCRIPTION OF DRAWINGS**

The present invention will now be described, by way of example with reference to the accompanying drawings, in which:

Fig. 1 is a diagram of a coherent lidar system in accordance with one embodiment;
Fig. 2 is a representation of polarizations of light signals present in the system of Fig. 1 in accordance with one embodiment; and
Fig. 3 is an alternative diagram of a coherent lidar system that is an alternative to the system of Fig. 1 in accordance with one embodiment.

**DETAILED DESCRIPTION**

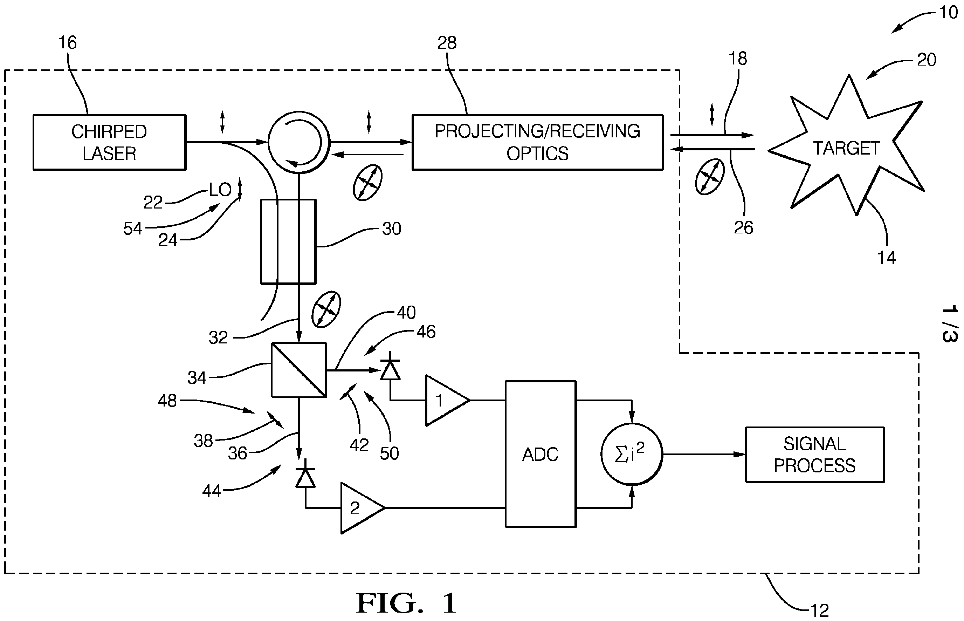

Fig. 1 illustrates a non-limiting example of a coherent lidar system 10, hereafter referred to as the system 10, which is suitable for use on an automated vehicle 12. As used herein, the term 'automated vehicle' is not meant to suggest that fully automated or autonomous operation of the automated vehicle 12 is required. It is contemplated that the teachings presented herein are applicable to instances where the automated vehicle 12 is entirely manually operated by a human-operator (not shown) except for automated target detection by the system 10 which may merely activate an audible and/or visible warning to warn the human-operator of the presence of an object or a target 14 proximate to the automated vehicle 12. That is, the automated vehicle 12 may be operable in an automated-mode which may be a fully autonomous type of operation where the human-operator does little more than designate a destination, and/or the automated vehicle 12 may be operable in a manual-mode where the human-operator generally controls the steering, accelerator, and brakes of the automated vehicle 12. It is also contemplated that the teaching present herein are applicable to non-automotive applications where laser light is used to detect, for example, the presence, composition, and/or characteristics of various chemicals.
The system 10 includes a laser-unit 16 used to provide a laser-beam 18 directed toward a target-area 20 and generate a local-oscillator 22, which is characterized by a reference-polarization 24, for example a vertical linear polarization as suggested in the illustration. In this non-limiting example the same output from the laser-unit 16 used for the local-oscillator 22 is also used to generate the laser-beam 18 so the local-oscillator 22 and the laser-beam 18 have the same polarization. However, this is not a requirement. For example, the system 10 could include a quarter-wave-polarizer (QWP) positioned so the laser-beam 18 is circularly polarized, and some other polarization may be applied to the local oscillator 22. As will become clear in the explanation that follows, the polarization of the laser-beam 18 is not critical as the system 10 is able to coherently detect the target 14 regardless of the polarization of the reflected-light 26 because the system 10 decomposes the reflected-light 26 into two orthogonal vectors or states. Because the two vectors are orthogonal and complete, total optical power of the reflected-light 26 will be conserved. However, as will be recognized by those in the art, it may be advantageous for the local-oscillator 22 and the laser-beam 18 to have certain polarizations, which are not necessarily the same, depending on the nature of the target 14.
Preferably, the laser-unit 16 is a semiconductor type laser that uses a laser diode (LD), which may also be known as an injection laser diode (ILD) to generate laser-light, as the power requirements, cost, and complexity are relatively low when compared to other technologies. That the system 10 described herein uses coherent detection enables the use of a laser diode to detect objects or targets at distances sufficient to be useful in automotive applications. It is also preferable that the laser-unit 16 be configured to output a frequency modulated continuous wave (FMCW) form of the local-oscillator 22 and the laser-beam 18 which can improve receiver sensitivity, reduce range dependence, and avoid the high peak power required of the output laser when compared to a lidar that operates based on laser pulses. The low laser power requirement and potential to cover a long range with semiconductor lasers operating in the FMCW mode makes using coherent detection particularly attractive for vehicle applications.
The system 10 also includes a lens 28 used to collect the reflected-light 26 that is a reflection of the laser-beam 18 reflected by the target 14 present in the target-area 20. While Fig. 1 suggests that the laser-beam and the reflected-light 26 pass through the same optical-devices that form the lens 28, this is not a requirement, and is only shown this way for convenience. Alternatively, the laser-beam 18 and the reflected-light 26 may be focused and/or directed by completely independent devices, as will be recognized by those in the art.
The system 10 also includes a coupler 30 used to combine the reflected-light 26 collected by the lens 28 with the local-oscillator 22 to form a composite-beam 32. In this non-limiting example, the coupler 30 is a fiber-coupler because for automotive applications fiber-optics are preferred to couple or propagate light about the system, e.g. to and from the lens 28. However, other means to couple or propagate the various light signals (e.g. the local-oscillator and the composite-beam 32) about the system 10 are envisioned such as mirrors and other optical devices used to control the propagation of light through 'free-space'. The fiber coupler that forms the coupler 30 is a commercially available device that provides a means to output the composite-beam 32 that is the result of interference between the local-oscillator 22 and the reflected-light 26 so that coherent detection of the reflected-light 26 is possible. It is necessary that the polarization of the local-oscillator 22 present in the composite-beam is known so that, as will be explained in more detail below, coherent detection can be performed without relying on an actively controlled polarizer to match or align the polarization of the reflected-light 26 to the reference-polarization 24 of the local-oscillator 22.

The system 10 also includes a polarized-beam-splitter 34 used to provide a first-beam 36 that corresponds to the composite-beam 32 polarized to a first-polarization 38, and a second-beam 40 that corresponds to the composite-beam 32 polarized to a second-polarization 42 different from the first-polarization 38. That is, the first-beam 36 is made up of the portion of the composite-beam 32 that corresponds to the first-polarization 38, and the second-beam 40 is made up of the portion of the composite-beam 32 that corresponds to the first polarization 38. Advantageously, the first-polarization 38 and the second-polarization 42 are selected so a first-power 44 of the local-oscillator 22 present in the first-beam 36 is substantially equal (e.g. +/- 5%) to a second-power 46 of the local-oscillator 22 present in the second-beam 40. It should be appreciated that the more equal the first-power 44 is to the second-power 46, the better the system 10 operates. However, it is not a requirement that the first-power 44 be exactly equal to the second-power 46.

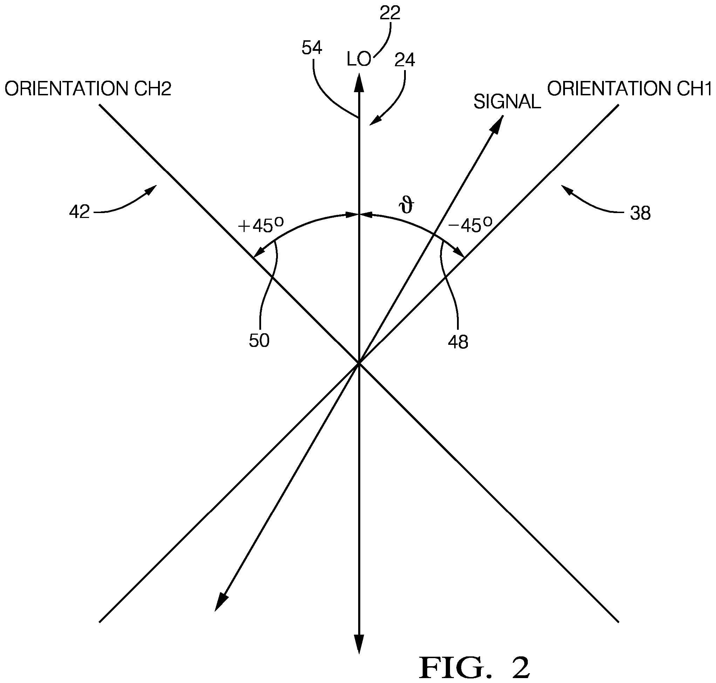

Fig. 2 is a non-limiting example of the relationships of signals present in the system 10 shown in Fig. 1. As mentioned before for this non-limiting example, the reference-polarization 24 of the local-oscillator 22 is characterized as linear-polarization to a reference-angel 54, zero degrees (0°) for example. The value of the reference-angle 54 can be assigned any value, but one convention suggests zero degrees is preferred to simplify the explanation. The first-polarization 38 is characterized as linear-polarization to a first-angle 48 measured relative to the reference-angle 54, minus forty-five degrees (-45°) for example, and the second-polarization 42 is characterized as linear-polarization to a second-angle 50 measured relative to the reference-angle 54, plus forty-five degrees (+45°) for example. Advantageously, the second-angle 50 is perpendicular to the first-angle 48. However, it is recognized that the system 10 would operate if the second-angle 50 is not precisely perpendicular to the first-angle 48.

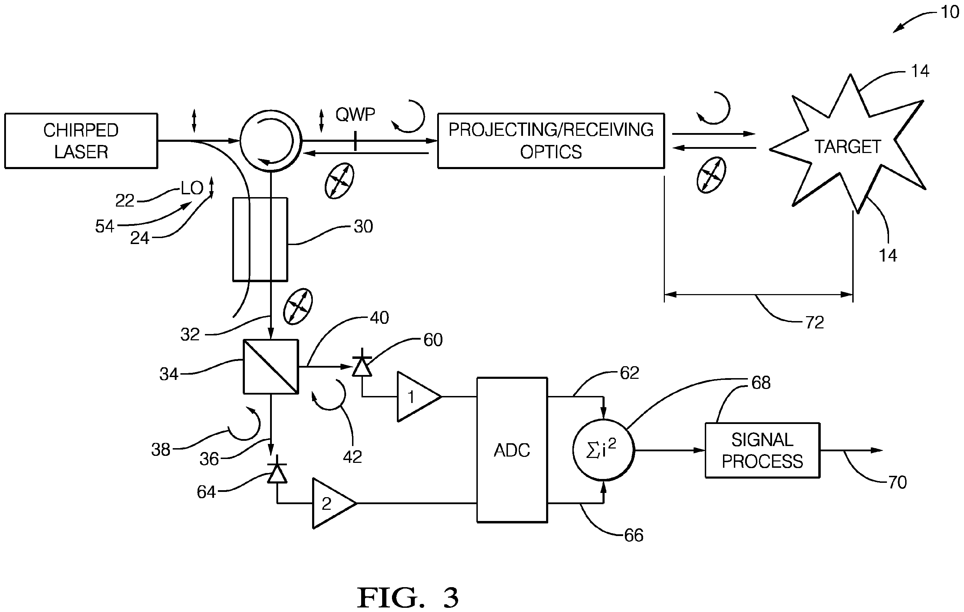

Fig. 3 illustrates an alternative, non-limiting configuration of the system 10 where the reference-polarization 24 of the local-oscillator 22 is characterized as linear-polarization to a reference-angel 54, the first-polarization 38 is characterized as clockwise-polarization, and the second-polarization 42 is characterized as counter-clockwise-polarization. As will be recognized by those in the art, the configuration of the polarized-beam-splitter 34 in this example may include a quarter-wave-polarizer (QWP), which would be different from that used in Fig. 1.

Continuing to refer to Figs. 1 and 3, the system 10 includes a first-detector 60 used to provide a first-signal 62 indicative of, for example, the optical power or intensity of the first-beam 36, and a second-detector 64 used to provide a second-signal 66 indicative, for example, the optical power or intensity of the second-beam 40.

The system 10 also includes a processor 68 configured to combine the first-signal 62 and the second-signal 64 using a sum-of-squares process to provide a ranging-signal 70 indicative of a distance 72 to the target 14. After the sum-of-squares process of the two photodiode currents, the final result is proportional to the square of the optical power and independent to the original polarization, and this is the key idea of this disclosure. The details of process provide by the processor 68 are explained below.

Assuming the powers of the local-oscillator signal and the return signal are PLO and Ps and the time delay caused by the target is Ttarget, their E components on the polarization in the orientation of channel 1 and 2 are:
Channel 1:

$$ELO1 = [(\pi/4)^*\text{sqrt}[2^*PLO/\text{k}]] * \cos[\omega(t)^*t + \varphi LO]$$
$$\text{Eq. 1,}$$

$$ES1 = [\theta^*\text{sqrt}[2^*PS/\text{k}]] * \cos[\omega(t - Ttarget)^*t + \varphi S]$$
$$\text{Eq. 2,}$$

Channel 2:

$$ELO2 = [(\pi/4)^*\text{sqrt}[2^*PLO/\text{k}]] * \cos[\omega(t)^*t + \varphi LO]$$
$$\text{Eq. 3,}$$

$$ES2 = [\theta*\mathrm{sqrt}[2*PS/\mathrm{k}]] * \cos[\omega(t - Ttarget)*t + \varphi S]$$

$$\text{Eq. 4,}$$

where $k = Seff/\zeta = Seff*\varepsilon 0*c0$, where Seff is the effective beam area, $\zeta$ is the impedance of the free space, $\varepsilon 0$ is the vacuum permittivity, and c0 is the speed of light in vacuum.

After photodetection, the optical frequency and DC components will be rejected by the receiver, and only the beat signal will be left for further process. Then, the AC current in each channel is

$$i1(t) = 4*R*cos[\pi/4] * cos[\theta*\mathrm{sqrt}[PLO*PS]] * cos[\xi*Ttarget*t + \varphi LO - \varphi S]$$

$$\text{Eq. 5,}$$

$$i2(t) = 4*R*\sin[\pi/4] * \sin[\theta*\mathrm{sqrt}[PLO*PS]] * cos[\xi*Ttarget*t + \varphi LO - \varphi S]$$

$$\text{Eq. 6,}$$

where $\xi$ is the frequency ramping rate in the frequency chirping and R is the photodiode responsivity.

Then, the sum of square of the two will be

$$(i(t))^{\wedge}2 = 8*(R^{\wedge}2)*PLO*PS* cos^{\wedge}2[\xi*Ttarget*t + \varphi LO - \varphi S]$$

$$\text{Eq. 7.}$$

As expected, it is independent to the return signal polarization and no signal power is lost in the process. By analyzing its frequency, we can extract the ranging information of the target.

Accordingly, a coherent lidar system (the system 10), a processor 68 for the system 10, and a method of operating the system 10 is provided. Features of the system 10 include:

- Different polarization control strategy: Prior examples of coherent detection system try to align the polarization of the reflected-light 26 with local-oscillator 22 and it is a dynamic or active process. In the system 10 described herein, there is no control of the polarization of the reflected-light 26. Instead, the polarized-beam-splitter 34 and two receiver channels were used. The polarization dependence was eliminated after a current sum of square of the two channels.
- This solution can be applied to both fiber optics and free space optics.
- This solution can be applied to linear, circular, and other orthogonal polarizations.
- The receiver optics can be separated from the projecting optics and avoid the circulator depicted in Figs 1 and 3.
- The receivers are recommended to be balanced receivers, but normal receiver with sufficient dynamic range and AC output will also work.
- The ADC for the receiver channels can be done before or after the sum of square process.
- The alignment of the polarization splitter to the local-oscillator polarization splits the local-oscillator power evenly between the two receiver channels to ensure a complete elimination of the polarization dependence of the output.

While this invention has been described in terms of the preferred embodiments thereof, it is not intended to be so limited, but rather only to the extent set forth in the claims that follow.

## Claims

1. A coherent lidar system (10) suitable for use on an automated vehicle (12), said system (10) comprising:

   a laser-unit (16) used to provide a laser-beam (18) directed toward a target-area (20) and generate a local-oscillator (22), wherein the local-oscillator (22) is **characterized by** a reference-polarization (24);
   a lens (28) used to collect reflected-light (26) that is a reflection of the laser-beam (18) by a target (14) present in the target-area (20);

a coupler (30) used to combine the reflected-light (26) collected by the lens (28) and the local-oscillator (22) to form a composite-beam (32); and

a polarized-beam-splitter (34) used to provide a first-beam (36) that corresponds to the composite-beam (32) polarized to a first-polarization (38), and a second-beam (40) that corresponds to the composite-beam (32) polarized to a second-polarization (42) different from the first-polarization (38).

2. The system (10) in accordance with claim 1, wherein the first-polarization (38) and the second-polarization (42) are selected so a first-power (44) of the local-oscillator (22) present in the first-beam (36) is substantially equal to a second-power (46) of the local-oscillator (22) present in the second-beam (40).

3. The system (10) according to any one of the preceding claims, wherein the reference-polarization (24) of the local-oscillator (22) is characterized as linear-polarization to a reference-angel (54), the first-polarization (38) is characterized as linear-polarization to a first-angle (48) measured relative to the reference-angle (54), and the second-polarization (42) is characterized as linear-polarization to a second-angle (50) measured relative to the reference-angle (54).

4. The system (10) in accordance with claim 3, wherein the second-angle (50) is perpendicular to the first-angle (48).

5. The system (10) in accordance with claim 4, wherein the first-angle (48) is minus forty-five degrees relative to the reference-angle (54), and the second-angle (50) is plus forty-five degrees relative to the reference-angle (54).

6. The system (10) according to any one of the preceding claims, wherein the reference-polarization (24) of the local-oscillator (22) is characterized as linear-polarization to a reference-angel (54), the first-polarization (38) is characterized as clockwise-polarization, and the second-polarization (42) is characterized as counter-clockwise-polarization.

7. The system (10) according to any one of the preceding claims, wherein the laser-unit (16) is configured to frequency-modulate the laser-beam (18) and the local-oscillator (22).

8. The system (10) according to any one of the preceding claims, wherein the system (10) includes a first-detector (60) used to provide a first-signal (62) indicative of the first-beam (36), and a second-detector (64) used to provide a second-signal (64) indicative of the second-beam (40).

9. The system (10) according to any one of the claims 4 or 5, wherein the system (10) includes a processor (68) configured to combine the first-signal (62) and the second-signal (64) using a sum-of-squares process to provide a ranging-signal (70) indicate of a distance (72) to the target (14).

FIG. 1

FIG. 2

**FIG. 3**

EP 3 296 764 A1

Europäisches
Patentamt

European
Patent Office

Office européen
des brevets

# EUROPEAN SEARCH REPORT

Application Number

EP 17 19 1189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/268499 A1 (HOLZAPFEL WOLFGANG [DE]) 21 October 2010 (2010-10-21) * paragraphs [0002], [0089] - [0091], [0130], [0093], [0152], [0144]; figures 2,2a,4 * ----- | 1-9 | INV. G01S17/32 G01S7/499 G01S7/491 |
| Y | US 5 114 226 A (GOODWIN FRANK E [US] ET AL) 19 May 1992 (1992-05-19) * column 10, lines 3-12; claim 5; figure 3 * ----- | 1-9 | |

TECHNICAL FIELDS
SEARCHED (IPC)

G01S

The present search report has been drawn up for all claims

| Place of search | Date of completion of the search | Examiner |
|---|---|---|
| Munich | 5 February 2018 | Metz, Carsten |

EPO FORM 1503 03.82 (P04C01)

## ANNEX TO THE EUROPEAN SEARCH REPORT
## ON EUROPEAN PATENT APPLICATION NO.

EP 17 19 1189

This annex lists the patent family members relating to the patent documents cited in  the above-mentioned European search report.
The members are as contained in the European Patent Office EDP file on
The European Patent Office is in no way liable for these particulars which are merely given for the purpose of information.

05-02-2018

| Patent document cited in search report | | Publication date | Patent family member(s) | | Publication date |
|---|---|---|---|---|---|
| US 2010268499 | A1 | 21-10-2010 | CN | 101868688 A | 20-10-2010 |
| | | | DE | 102007055665 A1 | 28-05-2009 |
| | | | EP | 2223038 A1 | 01-09-2010 |
| | | | JP | 5226078 B2 | 03-07-2013 |
| | | | JP | 2011504234 A | 03-02-2011 |
| | | | US | 2010268499 A1 | 21-10-2010 |
| | | | WO | 2009065463 A1 | 28-05-2009 |
| US 5114226 | A | 19-05-1992 | NONE | | |

EPO FORM P0459

For more details about this annex : see Official Journal of the European Patent Office, No. 12/82